# EUROPEAN PATENT APPLICATION

(11) **EP 1 016 811 A2**
(43) Date of publication of application: **05.07.2000**
(21) Application number: 99850211.6
(22) Date of filing: 23.12.1999
(51) Int. Cl.: F16J 15/32

(54) **A sealing device**

(30) Priority: 30.12.1998 SE 9804613
(71) Applicant: Aktiebolaget SKF (publ), S-415 50 Göteborg (SE)
(72) Inventor: Bundgart, Asbjörn, 10020 Baldissero Torninese (TO) (IT)
(74) Representative: Westman, P. Börje I.

(57) **Abstract**

A sealing device primarily for sealing off a slit-shaped space between two radially extending, abutting surfaces (la,4d) arranged about a shaft (2), and axially displaceable relative to each other along said shaft, wherein the device incorporates a first sleeve-shaped seal part (4), forming together with the shaft (1) an axially open space (6) facing the co-operating surface (la), and having a certain area and/or a certain shape, that the device further incorporates a elastically, resilient sealing body (7), having in uncompressed state a cross-sectional area and/or a shape deviating from the area or shape of the said space, thus that the sealing body (7) when subjected to axial forces causing the said surfaces to abut each other, is compressed sealingly between the said axial space (6) and the co-operating surface (1a), thereby creating a sealing engagement against the entrance of said slit-shaped space and against the shaft (2).

## Description

The present invention refers to a sealing device for sealing off a slit-formed space between two radially extending surfaces arranged around a shaft, and being axially displaceable relative to each other along said shaft.

Sealing devices for such purposes are known in a plurality of different designs, wherein these earlier embodiments have been rather complex and/or required a certain skill at mounting of the sealing device in a manner appropriate for giving the best possible sealing effect.

The purpose of the present invention is to provide such a sealing device, which is simple in design and to install and which is yet very efficient and this has been achieved in that the sealing device has been given the features defined in the characterizing part of the accompanying claim 1.

Hereinafter the invention will be further described with reference to three different, non-limiting embodiments, shown in the accompanying drawings.
Fig. 1 is a side view of a portion of shaft, with a sealed off bearing combination, wherein a first embodiment of the sealing device according to the invention is included.
Fig. 2 is a corresponding view in bigger scale of the seal assembly in Fig. 1, inclusive the sealing device according to the invention.
Figs. 3 and 4 show schematically a ball bearing sealed off with a second embodiment of a sealing device according to the invention, in side views before and after mounting resp.
Fig. 5 is a side view of a fraction of a shaft with a ring member to be sealed off by a third embodiment of the sealing device according to the invention, in a pre-mounting position.
Fig. 6 is a planar view of a portion of a sleeve forming part of the sealing device according to Fig. 5.
Fig. 7 shows a planar view of a sealing body to be used with the sleeve shown in Fig. 6, and
Fig. 8 is a view corresponding to Fig. 5, wherein the sealing device is shown in mounted condition.

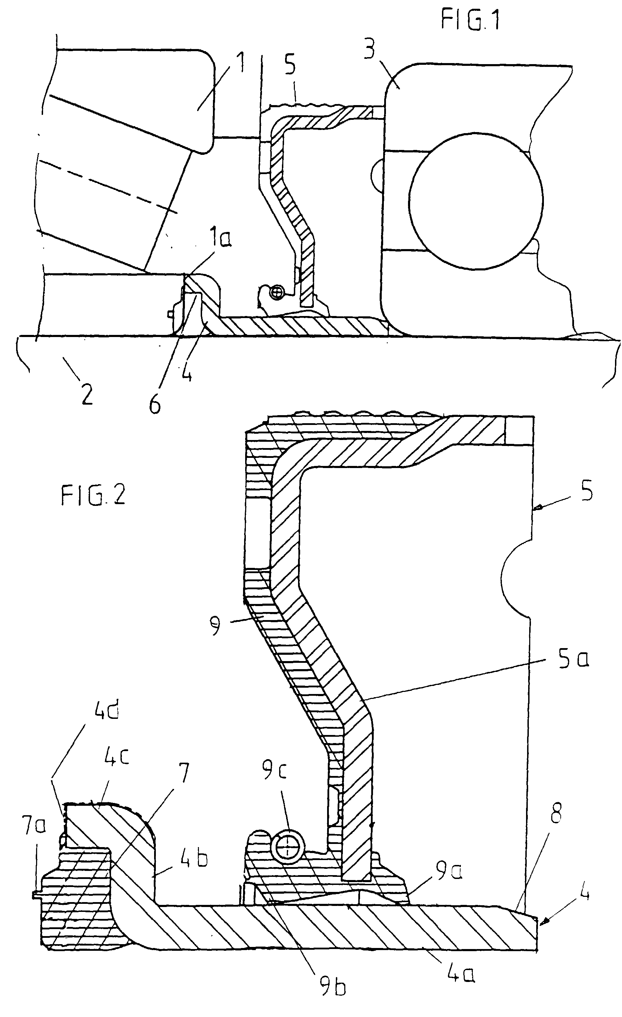

Fig. 1 shows schematically a fragmentary side view, partly in section, of a bearing arrangement particularly adapted for supporting a shaft in a motor pump, incorporating a taper roller bearing 1 mounted on such a shaft 2, only a small portion of which is intimated, a deep groove ball bearing 3 mounted on the same shaft, and a two part sealing device 4, 5, provided between the two bearings and adapted to seal off the left hand side of the ball bearing 3, the space between the shaft 2 and the interior of the taper roller bearing 1, and particularly the slit-formed space between the side face of the taper bearing inner race ring 1a, extending radially from the shaft, and a radial surface 4d thereon (see Fig. 2).

As can be better seen in Fig. 2 showing the two-part sealing device 4, 5 in bigger scale, the first part, part 4 is constituted by a substantially cylindrical sleeve 4a, adapted to fit around the shaft 2 (see Fig. 1) and having at one axial end thereof a substantially radially extending portion 4b continuing in an axially extending flange portion 4c, the radial portion 4b and the axial flange 4c, thereby forming together with the shaft 2 an axially open, annular space 6 (see Fig. 1). The axially extending flange ends in a radial sealing surface 4d arranged to abut the side face of the inner race ring of the taper roller bearing 1, thereby forming together with this, a slit-shaped space. In the annular space 6 is provided a resiliently compressible sealing body 7, having a size and/or a shape, which guarantees that it, when the abutting sealing surface 4d is pressed to abutment with the co-operating radial surface - here the side surface of the inner taper bearing race ring - is compressed thus that it sealingly will contact the entrance of the slit-shaped space and also the shaft, thereby under a certain pretension, preventing leakage in any direction along the shaft 2 at this annular space 6 and also through the slit-shaped space. In the embodiment shown the sealing body 7 is provided with a projecting rim portion 7a, intended to increase the contact pressure between the compressed sealing body 7 and the co-operating surface directly against the side face of the bearing ring or in a (not shown) annular groove provided therein.

In the embodiment shown in Fig. 1 and 2, the axial end of the sleeve-formed part 4a of the first seal part 4, opposed to the radially extending part 4b, is designed with an external, annular chamfer 8, arranged to engage the inner race ring of the ball bearing 3, and thereby preferably against the rounded side face of the bearing ring, thereby giving a sealing line contact against this. (see Fig. 1).

The second part 5 of the seal is of a more conventional design and incorporates a first shield member 5a, made from metal or a plastic material, and being cup-shaped with a central opening. The diameter of the opening in the shield 5a is somewhat bigger than the outer diameter of the sleeve-formed seal part 4. The shield member 5a is on one axial side provided with an elastic and resilient lining 9, having two inwardly projecting and axially spaced apart sealing lips 9a, 9b, both arranged slidingly to contact the external envelope surface of the first seal part 4. In a manner known per se, a spring 9c is arranged to urge the sealing lip 9b against the co-operating envelope surface of the first seal part 4, thereby improving the sealing effect. The lining 9 is preferably affixed to the shield member 5a by vulcanization or in any other convenient manner.

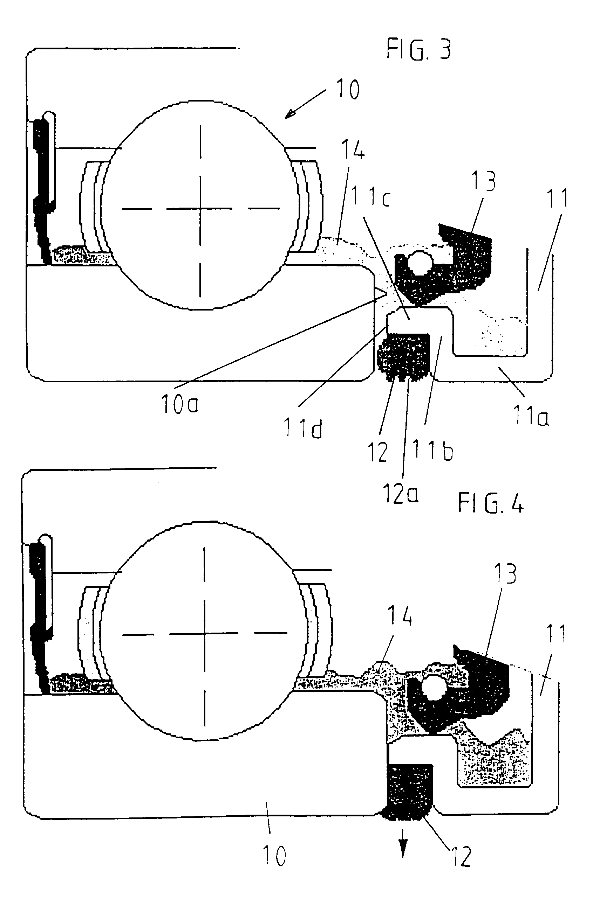

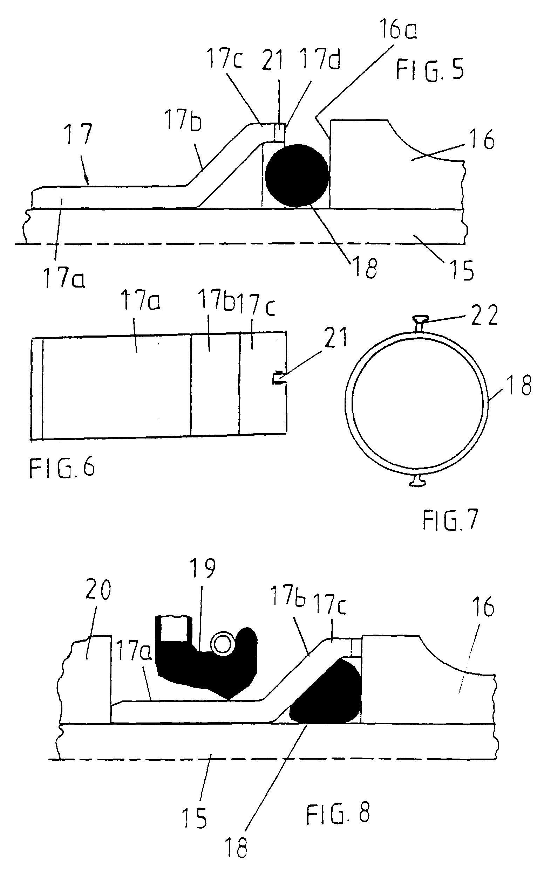

Fig. 3 and 4 illustrate in partial cross-sectional views a second embodiment of the invention. In this embodiment is shown a portion of a ball bearing 10, having in conventional manner inner ring, outer ring, a number of balls provided between the bearing rings and in rolling contact with grooved race tracks formed in said rings. The balls are guided and kept apart by a cage, and on the left hand side as seen in the figures, a conventional sliding seal is provided to span the space between the inner and outer bearing ring.

At the right hand side, as seen in Fig. 3 and 4, there is provided a seal according to the present invention, which incorporates a sleeve member 11 with a substantially cylindrical sleeve 11a, adapted to fit around a shaft (not shown) and having at one axial end thereof a substantially radially extending portion 11b continuing in an axially extending flange portion 11c, the radial portion 11b and the axial flange 11c, thereby forming together with the shaft an axially open, annular space. The axially extending flange ends in a radial sealing surface 11d arranged to abut the side face of the inner race ring of the bearing 10, thereby forming together with this, a slit-shaped space. In the annular space is provided a resiliently compressible sealing body 12, having a size and/or a shape, which guarantees that it, when the abutting sealing surface 11d is pressed to abutment with the co-operating radial surface - here the side surface of the inner bearing ring - is compressed thus that it sealingly will contact the entrance of the slit-shaped space and also the shaft, thereby, under a certain pretension, preventing leakage in any direction along the shaft at this annular space and also through the slit-shaped space. A lip seal 13 of any appropriate type is arranged to co-operate with the sleeve member - in the embodiment shown with the outer envelope surface of its axial flange 11c - thereby forming an additional seal.

Fig. 3 shows the situation before mounting of the seal 11, whereas Fig. 4 shows the bearing 10 with the seal 11 mounted thereto. Thus in Fig. 3 the bearing 10 is situated on a not shown shaft in its mounting position. Also the seal 11 is positioned on the shaft, but with its radial side face 11d facing the bearing at a small axial distance from the side face of the inner bearing ring. In this position it is clearly visible how the compressible, resilient sealing body 12, has such a size that it clearly projects outside the side face 11d of the seal. As shown in Fig. 4, the seal 11 has been pushed up in a direction to the left in the figure, thus that the radial side face 11d thereof has come to a position abutting the side face of the bearing inner ring. Thereby the sealing body 12 has been compressed in its space and is pressing sealingly against the side face of the bearing inner ring, and also against the not shown shaft, such as illustrated by the arrow.

In order to increase the ability of the sealing body 12 to adapt itself to the shape of the shaft, the surface of the sealing body facing the shaft can preferably be serrated as shown at 12a in Fig. 3.

The bearing 10 is preferably provided with a volume of lubricant 14, and when the bearing is sealed off in the illustrated manner it can contain a sufficient lubricant volume for its operating life. For maintaining the axial force required for causing the sealing body to be compressed sufficiently for sealing off the spaces, the sleeve member 11 is arrested in the position illustrated in Fig. 4, by means of a proper locking device, known per se, such as a not shown locking ring or the like.

In Fig. 5 to 8 is shown a further main type of a sealing device according to the present invention, together with a specific detail solution thereof (Fig. 6 and 7).

In Fig. 5 is schematically illustrated a portion of a shaft 15 on which is arranged a ring 16, e.g. a bearing ring having a side face surface 16a projecting radially from the shaft. To the left of the ring member 16, there is provided a seal according to the present invention, which incorporates a sleeve member 17 with a substantially cylindrical sleeve 17a, adapted to fit around the shaft 15 and having at one axial end thereof an upwardly, outwardly sloping portion 17b continuing in an axially extending flange portion 17c, the sloping portion 17b and the axial flange 17c, thereby forming together with the shaft 15 an axially open, annular space. The axially extending flange 17c ends in a radial sealing surface 17d arranged to abut the side face of the ring 16, thereby forming together with this, a slit-shaped space. In the annular space is provided a resiliently compressible sealing body 182, having a shape, which guarantees that it, when the abutting sealing surface 17d is pressed to abutment with the co-operating radial surface - here the side face 16a of the ring - is compressed thus that it sealingly will contact the entrance of the slit-shaped space and also the shaft, thereby, under a certain pretension, preventing leakage in any direction along the shaft at this annular space and also through the slit-shaped space. In this embodiment it is clearly visible that the axially open space formed between the sloping portion 17b of the seal 17, the axial flange 17c thereof, the shaft 15 and the co-operating radial side face 16a of the ring 16, has a cross-sectional area bigger than the cross-sectional area of the sealing body 18, which here is formed as an O-ring seal. In spite of this area difference, such as illustrated, the difference in shape between said space and the sealing body, means that the sealing body 18, will still be compressed to abutment against the ring member 16 and against the shaft 15, when the sleeve 17 is pushed up on the shaft 15 to a position where its radial surface 17d abuts the side face 16a of the ring 16 (or vice versa). This is illustrated in Fig. 8, where it is also shown how a conventional lip seal 19 can be provided to co-operate with the outer envelope surface of the sleeve 17a, and how the sleeve member 17 can be arrested in its mounted position by means of a locking ring 20 of appropriate type.

In the embodiments of the sealing device according to the invention shown in Fig.s 1 and 2, and in Fig.s 3 and 4 it is convenient to arrange the sealing body 7 and 12, resp. to be fixedly connected to the sleeve member 4 and 11 resp., e.g. by gluing, vulcanization or the like. This facilitates the handling of the seal, as this means that the two parts of the seal must not be handled, stored and transported separately, but as complete sealing units and it is thereby ascertained that the sealing body is always in position when the seal shall be mounted.

At the embodiment of the sealing device according to the present invention illustrated in Figs. 5 to 8, this problem is solved in a different manner in that the sleeve member 17 in its axial flange member 17d is provided with at least two axially outwardly open grooves 21, preferably diametrically opposed or symmetrically disposed around the sleeve. These grooves 21 illustrated in particular in Fig. 5 and 6, which latter is a short section in planar view of the sleeve member, are intended for receiving projecting lugs 22 arranged on the sealing body 18, intimated in Fig. 7, which shows in smaller scale a sealing body 18 of the type to be used.

Although the invention has been illustrated and described with reference to three different embodiments, it is evident that the invention is not limited thereto but modifications and variants are possible within the scope of the appended claims.

## Claims

1. A sealing device primarily for sealing off a slit-shaped space between two radially extending, abutting surfaces (1a,4d;10a,11d;16a,17d) arranged about a shaft (2; 15), and axially displaceable relative to each other along said shaft,
**characterized therein,**
that the device incorporates a first sleeve-shaped seal part (4;11;17), forming together with the shaft (1;15) an axially open space (6) facing the co-operating surface (1a;10a;16a), and having a certain area and/or a certain shape,
that the device further incorporates a elastically, resilient sealing body (7; 12; 18), having in uncompressed state a cross-sectional area and/or a shape deviating from the area or shape of the said space, thus that the sealing body (7; 12; 18) when subjected to axial forces causing the said surfaces to abut each other, is compressed sealingly between the said axial space (6) and the co-operating surface (1a;10a;16a), thereby creating a sealing engagement against the entrance of said slit-shaped space and against the shaft (2; 15).

2. A sealing device as claimed in claim 1,
**characterized therein,**
that sleeve-shaped part (4, 11) at one axial end has a substantially radially extending portion (4b, 11b) continuing in a substantially axial flange (4c, 11c), forming together with said shaft, the axially open space (6).

3. A sealing device as claimed in claim 1,
**characterized therein,**
that sleeve-shaped part (17) at one axial end has a portion (17b) inclined in a direction outward and continuing in a substantially axial flange (17c), forming together with said shaft, the axially open space.

4. A sealing device as claimed in anyone of the preceding claims,
**characterized therein,**
that the sealing body (7, 12) is of a size exceeding that of the said axially open space (6), having resilient portions protruding outside the said space when in un-mounted position.

5. A sealing device as claimed in anyone of claims 1-3,
**characterized therein,**
that the sealing body (18) has a shape with dimensions exceeding that of the open space in at least axial dimension of the sleeve-shaped part (17).

6. A sealing device as claimed in anyone of the preceding claims,
**characterized therein,**
that the sealing body (7, 12, 18) is connected to the axially open space (6) of the sleeve-shaped part (4, 11, 17).

7. A sealing device as claimed in claim 6,
**characterized therein,**
that the sealing body (7, 12) is rigidly connected to the sleeve-shaped part by gluing, vulcanization or the like.

8. A sealing device as claimed in claim 6,
**characterized therein,**
that the sealing body (18) is provided with projections (22), arranged to be detachably connected in attachment means (21) provided in the sleeve-shaped part (17).

9. A sealing device as claimed in anyone of the preceding claims,
**characterized therein,**
that the outer envelope surface of the sleeve-shaped part (4, 11, 17) of the sealing device is adapted to co-operate with a further seal (5, 13, 19).
